(19) 

Europäisches Patentamt

European Patent Office

Office européen des brevets

(11) **EP 4 779 560 A1**

(12) **EUROPEAN PATENT APPLICATION**

published in accordance with Art. 153(4) EPC

(43) Date of publication:
**22.07.2026 Bulletin 2026/30**

(21) Application number: **24883943.3**

(22) Date of filing: **18.06.2024**

(51) International Patent Classification (IPC):
*G06T 7/00* (2017.01)

(52) Cooperative Patent Classification (CPC):
**G06F 3/0481; G06T 7/00; G06V 10/74**

(86) International application number:
**PCT/CN2024/099934**

(87) International publication number:
**WO 2025/091932 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311452888**

(71) Applicant: **HUAWEI TECHNOLOGIES CO., LTD.
Shenzhen 518129 (CN)**

(72) Inventors:
• **WANG, Yichuan
Shenzhen, Guangdong 518129 (CN)**
• **YU, Quanhe
Shenzhen, Guangdong 518129 (CN)**
• **XU, Weiwei
Shenzhen, Guangdong 518129 (CN)**
• **ZHANG, Jiwu
Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **METADATA DETECTION METHOD AND APPARATUS**

(57) A metadata detection method and apparatus are disclosed, and relate to the field of multimedia technologies. A compute device obtains metadata of image data including one or a plurality of frames of images, and processes the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

FIG. 2

## Description

This application claims priority to Chinese Patent Application No. 202311452888.8, filed with the China National Intellectual Property Administration on November 2, 2023 and entitled "METADATA DETECTION METHOD AND APPARATUS", which is incorporated herein by reference in its entirety.

## TECHNICAL FIELD

This application relates to the field of multimedia technologies, and in particular, to a metadata detection method and apparatus.

## BACKGROUND

Dynamic range mapping in the video field is a process of adapting original video data obtained by a front end to a display device. The foregoing process depends on metadata in the video data, and the metadata includes a parameter for adapting an image contained in the original video data to the display device. To ensure the correctness of the foregoing adaptation process, basic verification is usually performed, such as detecting whether the type of metadata meets a requirement and whether the metadata complies with a corresponding specification. However, the foregoing basic verification can only evaluate the reliability of metadata from the perspective of metadata format. Picture quality of the image in the display device cannot be ensured when the image is mapped onto the display device for display based on the metadata.

## SUMMARY

This application provides a metadata detection method and apparatus, to resolve a problem that basic verification can only evaluate the reliability of metadata from the perspective of metadata format, and picture quality of an image in a display device cannot be ensured when the image is mapped onto the display device for display based on the metadata.

According to a first aspect, this application provides a metadata detection method. The metadata detection method may be applied to a computer system or a compute device that implements the metadata detection method in the computer system. The compute device is, for example, a server or a terminal (encoder side). The metadata detection method includes: The compute device obtains metadata of image data including one or a plurality of frames of images, and processes the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

Compared with a case in which only a type and a specification of the metadata are verified, in this application, the compute device may determine, by detecting the similarity between metadata of the two adjacent frames of images in the image data, a problem that picture flickering occurs during display of the image data in a case of a too large difference between the metadata of the two adjacent frames of images. In other words, in this application, a factor of display effect caused by the metadata is further considered, thereby improving a depth of detecting the metadata and ensuring picture quality during display of the image data. In addition, the compute device obtains the luminance mapping curve based on the metadata, and detects a geometric characteristic of the luminance mapping curve, to implement multi-dimensional detection on the metadata. In this way, a depth of detecting the metadata is further improved, and picture quality during display of the image data is ensured.

For example, the luminance mapping curve of the first image represents a correspondence between an original luminance value of a pixel in the first image and a display luminance value of the pixel when the first image is displayed.

In a possible implementation, that the compute device obtains the metadata of the image data includes: The compute device receives a trigger operation performed by a user on a control component in a user interface; and obtains the metadata of the image data in response to the trigger operation performed by the user on the control component.

In this application, the compute device interacts with the user through the user interface, to determine whether the user needs to perform quality detection on the metadata of the image data. In this way, while visualization is implemented, a degree of freedom in processing is improved by determining, based on a user requirement, whether to perform quality detection on the metadata.

In a possible implementation, when the detection policy indicates to determine the similarity between the metadata of the two adjacent frames of images in the plurality of frames of images, content in which the compute device processes the metadata of the image data based on the detection policy, to obtain the detection result may be the following two examples.

Example 1: The compute device determines a similarity between at least one piece of metadata of the two adjacent frames of images. If the similarity between the at least one piece of metadata of the two adjacent frames of images is greater than a first threshold, the detection result indicates that metadata of one of the two adjacent frames of images is normal; or if the similarity between the at least one piece of metadata of the two adjacent frames of images is less than a first threshold, the detection result indicates that metadata of one of the two adjacent frames of images is abnormal; or if a similarity between at least one piece of metadata of the two adjacent frames of images is equal to a first threshold, the detection result indicates that metadata of one of the two adjacent frames of images is abnormal or normal.

Example 2: The compute device determines luminance mapping curves of the two adjacent frames of images based on the metadata of the two adjacent frames of images, to determine a similarity between the luminance mapping curves of the two adjacent frames of images. If the similarity between the luminance mapping curves of the two adjacent frames of images is less than a first threshold, the detection result indicates that metadata of one of the two adjacent frames of images is abnormal; or if the similarity between the luminance mapping curves of the two adjacent frames of images is greater than a first threshold, the detection result indicates that metadata of one of the two adjacent frames of images is normal; or if the similarity between the luminance mapping curves of the two adjacent frames of images is equal to a first threshold, the detection result indicates that metadata of one of the two adjacent frames of images is normal or abnormal.

In this application, because the luminance mapping curve indicates the correspondence between the original luminance value of the pixel in the first image and the display luminance value of the pixel when the first image is displayed, a complete mapping relationship when the image is mapped onto the display device for display is shown. Therefore, the compute device may detect, by detecting quality of the metadata of the image data based on complete mapping relationships respectively corresponding to the two adjacent frames of images, whether picture flickering occurs when the image data is displayed. This avoids verifying only the type or the specification of the metadata, improves a depth of detecting the quality of the metadata, namely, reliability of the metadata, and ensures quality when the image data is displayed.

In a possible implementation, when the detection policy indicates to detect the geometric characteristic of the luminance mapping curve of the image data, content in which the compute device processes the metadata of the image data based on the detection policy, to obtain the detection result may be the following three examples.

Example 1: A luminance mapping curve corresponding to a second image includes a plurality of segments of curves, and the second image is any frame of image in the image data. The compute device determines a plurality of display luminance values that correspond to the plurality of segments of curves corresponding to the second image at each of the plurality of original luminance values; and calculates a difference between the plurality of display luminance values. If all differences are less than or equal to a second threshold, the detection result indicates that metadata of the second image is normal; or if at least one difference is greater than a second threshold, the detection result indicates that metadata of the second image is abnormal.

In this application, the compute device detects continuity of the luminance mapping curve, to avoid a problem that the luminance mapping curve corresponding to the metadata is discontinuous and a picture is broken when the image data is displayed, thereby ensuring picture quality when the image data is displayed.

Example 2: A luminance mapping curve corresponding to a third image includes a plurality of segments of curves, and the third image is any frame of image in the image data. The compute device determines monotonicity of the plurality of segments of curves corresponding to the third image. If the monotonicity corresponding to the plurality of segments of curves is non-uniform, the detection result indicates that metadata of the third image is abnormal; or if the monotonicity corresponding to the plurality of segments of curves is uniform, the detection result indicates that metadata of the third image is normal.

In this application, the compute device detects monotonicity of the luminance mapping curve, to avoid a problem that the corresponding display luminance value is small when the original luminance value is large, or the corresponding display luminance value is large when the original luminance value is small, namely, luminance inversion, thereby ensuring picture quality when the image data is displayed.

Example 3: The compute device determines a target original luminance value corresponding to a target display luminance value in a luminance mapping curve corresponding to a fourth image; and calculates a proportion of a quantity of pixels with an original luminance value greater than or less than the target original luminance value in the fourth image to a total quantity of pixels in the fourth image. The fourth image is any frame of image in the image data. If the proportion is greater than a third threshold, the detection result indicates that metadata of the fourth image is abnormal; or if the proportion is less than a third threshold, the detection result indicates that metadata of the fourth image is normal; or if the proportion is equal to a third threshold, the detection result indicates that metadata of the fourth image is normal or abnormal.

In this application, the compute device detects rationality (luminance rationality) of the luminance mapping curve, that is, detects whether an original luminance value corresponds to no display luminance value in the luminance mapping curve, to avoid a problem that luminance of a part of pixels is missing (that is, not displayed) when the image data is displayed, thereby ensuring picture quality when the image data is displayed.

In a possible implementation, the plurality of frames of images are images between two scene switch frames, and the scene switch frame is a last frame of image in a plurality of adjacent frames of images whose metadata has a similarity less than or equal to a fourth threshold. In other words, when performing the foregoing quality detection, the compute device detects only metadata of a plurality of frames of images between the two scene switch frames, thereby reducing a data calculation amount and improving data efficiency.

In a possible implementation, the metadata detection method further includes: if one or a plurality of frames of images whose metadata is abnormal as indicated by the detection result are scene switch frames, updating, to that the metadata is normal, the one or the plurality of frames of images whose metadata is abnormal as indicated by the detection result. The scene switch frame is a last frame of image in a plurality of adjacent frames of images whose metadata has a similarity less than or equal to a fourth threshold.

In this application, because scene switching occurs in the image data, it is normal that a sudden change of luminance, or the like occurs during scene switching. In other words, when a frame of image is a scene switch frame, it is allowed, namely, normal, that metadata of the scene switch frame is abnormal. The compute device sets a detection result corresponding to the scene switch frame to normal, which conforms to a scene switching rule.

For the scene switch frame, the following provides two examples of determining the scene switch frame.

Example 1: The compute device obtains a scene switch identifier included in metadata of a fifth image. The scene switch identifier indicates that the fifth image is a scene switch frame, and the fifth image is any frame of image in the image data.

Example 2: The compute device determines a similarity between an attribute of a pixel in a sixth image and an attribute of a pixel in a seventh image; calculates a similarity between metadata of the sixth image and metadata of the seventh image if the similarity between the attribute of the pixel in the sixth image and the attribute of the pixel in the seventh image is less than or equal to a fifth threshold; and determines that the sixth image is a scene switch frame. The sixth image and the seventh image are located in a same sliding window, the seventh image is one or a plurality of frames of images adjacent to the sixth image, and the sixth image and the seventh image are any frames of images in the image data. The similarity between the metadata of the sixth image and the metadata of the seventh image is less than or equal to a sixth threshold, and the attribute includes one or more of a luminance value or luminance-chrominance YUV.

In this application, the compute device determines the scene switch frame from the plurality of frames of images based on a similarity between attributes and a similarity between metadata, and may refer to the scene switch frame when determining abnormal metadata. To be specific, when a luminance mapping curve corresponding to the metadata of the scene switch frame has non-uniform monotonicity, inconsistent continuity, and the like, the metadata of the scene switch frame is still normal, thereby improving accuracy of determining the abnormal metadata.

In a possible implementation, the metadata detection method further includes: The compute device outputs the detection result.

For example, the compute device outputs the detection result to the display device.

In a possible implementation, the metadata detection method further includes: If the detection result indicates that metadata of one or a plurality of frames of images is abnormal, the compute device updates the metadata of the one or the plurality of frames of images whose metadata is abnormal.

In this application, the compute device updates the metadata of the one or the plurality of frames of images whose metadata is abnormal, to ensure quality when the display device displays the image data.

According to a second aspect, this application provides a metadata detection method. The metadata detection method may be applied to a computer system or a compute device that implements the metadata detection method in the computer system. The compute device is, for example, a server or a terminal (decoder side). The metadata detection method includes: The compute device obtains metadata of image data including one or a plurality of frames of images, and processes the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

For example, the luminance mapping curve of the first image represents a correspondence between an original luminance value of a pixel in the first image and a display luminance value of the pixel when the first image is displayed.

In a possible implementation, the metadata detection method further includes: performing an alarm based on the detection result if the detection result indicates that the similarity between the metadata of the two adjacent frames of images in the plurality of frames of images is less than or equal to the first threshold, and/or geometric characteristic detection of a luminance mapping curve of at least one frame of image in the image data is abnormal.

In a possible implementation, the metadata detection method further includes: The compute device performs mapping processing on one or a plurality of frames of images based on preset metadata if the detection result indicates that metadata of the one or the plurality of frames of images is abnormal. The one or the plurality of frames of images include an image whose metadata is abnormal.

In this application, when the metadata of the one or the plurality of frames of images is abnormal, the compute device maps the image data onto a display device based on the preset metadata, to ensure quality when the display device displays the image data.

For another possible implementation of the second aspect, refer to any possible implementation of the first aspect. Details are not described herein again.

According to a third aspect, this application provides a metadata detection apparatus. The metadata detection apparatus is used in a computer system or a compute device that supports the computer system in implementing a metadata detection method, and the metadata detection apparatus includes modules configured to perform the metadata detection method in any one of the first aspect or the optional implementations of the first aspect. For example, the metadata detection apparatus includes a first obtaining module and a first processing module.

The first obtaining module is configured to obtain metadata of image data. The image data includes one or a plurality of frames of images.

The first processing module is configured to process the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data. A luminance mapping curve of a first image is obtained based on metadata of the first image, and the first image is any frame of image in the image data.

For more detailed implementation content of the metadata detection apparatus, refer to the descriptions of any implementation of the first aspect and content of the following specific implementations. Details are not described herein again.

According to a fourth aspect, this application provides a metadata detection apparatus. The metadata detection apparatus is used in a computer system or a compute device that supports the computer system in implementing a metadata detection method, and the metadata detection apparatus includes modules configured to perform the metadata detection method in any one of the second aspect or the optional implementations of the second aspect. For example, the metadata detection apparatus includes a second obtaining module and a second processing module.

The second obtaining module is configured to obtain metadata of image data. The image data includes one or a plurality of frames of images.

The second processing module is configured to process the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

For more detailed implementation content of the metadata detection apparatus, refer to the descriptions of any implementation of the second aspect and content of the following specific implementations. Details are not described herein again.

According to a fifth aspect, this application provides a chip, including a processor and a power supply circuit. The power supply circuit is configured to supply power to the processor. The processor is configured to perform the method according to any one of the first aspect or the possible implementations of the first aspect; and/or the processor is configured to perform the method according to any one of the second aspect or the possible implementations of the second aspect.

According to a sixth aspect, this application provides a coder, including a memory and a processor. The memory is configured to store computer instructions. When the processor executes the computer instructions, the method according to any one of the first aspect or the possible implementations of the first aspect is implemented; and/or when the processor executes the computer instructions, the method according to any one of the second aspect or the possible implementations of the second aspect is implemented. The coder may be an encoder or a decoder.

According to a seventh aspect, this application provides a computer-readable storage medium. The storage medium stores a computer program or instructions. When the computer program or the instructions are executed by a processing device, the method according to any one of the first aspect or the possible implementations of the first aspect is implemented; and/or when the computer program or the instructions are executed by a processing device, the method according to any one of the second aspect or the possible implementations of the second aspect is implemented.

According to an eighth aspect, this application provides a computer program product. The computer program product includes a computer program or instructions. When the computer program or the instructions are executed by a processing device, the method according to any one of the first aspect or the possible implementations of the first aspect is implemented; and/or when the computer program or the instructions are executed by a processing device, the method according to any one of the second aspect or the possible implementations of the second aspect is implemented.

For beneficial effects of the second aspect to the eighth aspect, refer to any one of the first aspect or the possible implementations of the first aspect. Details are not described herein. In this application, based on the implementations provided in the foregoing aspects, the implementations may be further combined to provide more implementations.

**BRIEF DESCRIPTION OF DRAWINGS**

FIG. 1 is a diagram of an application scenario of a computer system according to this application;

FIG. 2 is a schematic flowchart 1 of a metadata detection method according to this application;

FIG. 3 is a diagram of an image user interface according to this application;

FIG. 4 is a schematic flowchart 1 of a geometric characteristic detection method according to this application;

FIG. 5 is a schematic flowchart 2 of a geometric characteristic detection method according to this application;

FIG. 6 is a schematic flowchart 3 of a geometric characteristic detection method according to this application;

FIG. 7 is a schematic flowchart of a scene switch frame determining method according to this application;

FIG. 8 is a schematic flowchart 2 of a metadata detection method according to this application;

FIG. 9 is a diagram 1 of a structure of a metadata detection apparatus according to this application;

FIG. 10 is a diagram 2 of a structure of a metadata detection apparatus according to this application;

FIG. 11 is a diagram 3 of a structure of a metadata detection apparatus according to this application;

FIG. 12 is a diagram 4 of a structure of a metadata detection apparatus according to this application; and

FIG. 13 is a diagram of a structure of a compute device according to this application.

## DESCRIPTION OF EMBODIMENTS

For ease of understanding, technical terms in this application are first described.

A high dynamic range (high dynamic range, HDR) indicates an image whose dynamic range is from 0.001 nits (nit) to 10000 nits. nit is a unit of luminance.

A standard dynamic range (standard dynamic range, SDR) indicates an image whose dynamic range is from 1 nit to 100 nits.

Metadata (metadata) indicates key feature information of each frame of image in a video in this application, for example, average luminance, maximum luminance, or minimum luminance of a scene.

Static metadata (static metadata) indicates metadata that remains unchanged in an entire video or scene.

Dynamic metadata (dynamic metadata) indicates metadata that dynamically changes based on a scene or each frame.

Tone mapping (tone mapping, TM) indicates a tone mapping technology between dynamic ranges, namely, an adjustment mode between different dynamic ranges.

The following provides an example of a process of adapting an original video obtained at a video production end to a display device for display. An HDR original video is collected or produced at the video production end, and may have maximum luminance of 4000 nits, but an SDR display capability of a display device is only 100 nits. Therefore, the original video of 4000 nits needs to be mapped onto 100 nits, to be displayed on the display device.

The foregoing mapping method may include static mapping or dynamic mapping. Static mapping is performing overall mapping on a same video or same image content based on a single piece of static metadata. Dynamic mapping is mapping each scene or each frame based on a feature of each frame of image in a video and different data, that is, performing mapping based on dynamic metadata.

An advantage of the static mapping is that the static mapping carries a small amount of information and a processing procedure is simple. An advantage of the dynamic mapping is that in an extremely dark or extremely bright scene, details of the scene in the video are still reserved, and display effect is good.

The foregoing mapping process depends on metadata that includes key information or features in the video. A mapping curve obtained based on the metadata is used to adapt the original video to the display device for display. The mapping curve is used to represent a correspondence between original luminance of a pixel in an image in the video and display luminance of a pixel when the image is displayed.

The metadata of the original video is usually detected, to ensure that the display device can better display content of the original video. The following provides two possible detection manners.

Detection manner 1: After the video is encoded to obtain a bitstream, whether the metadata of the video is correctly encapsulated in the bitstream is detected.

Because there is a corresponding specification (for example, supplemental enhancement information (supplemental enhancement information, SEI)) for an encapsulation location of the metadata in the bitstream (a media file), in this solution, the bitstream may be parsed, and whether the corresponding metadata may be found is determined based on an identifier of the metadata.

In the foregoing solution, only whether the metadata is correctly encapsulated can be determined, but quality of the metadata is not detected.

Detection manner 2: After the video is encoded to obtain a bitstream, a type of the metadata in the bitstream may be detected, to determine whether the type of the metadata meets a preset requirement, and whether a parameter corresponding to the metadata meets a specified specification definition and threshold range, for example, determining Boolean metadata/fixed-point metadata.

When the Boolean metadata is determined, whether the Boolean metadata has only two values: a true value and a false value may be determined. When the fixed-point metadata is determined, whether the fixed-point metadata overflows a bit (bit) value range may be determined, and a value range of N-bit non-negative fixed-point metadata is 0 to $2^N-1$.

In Detection manner 2, only basic verification is performed on the metadata, that is, only whether different types of metadata meet specification requirements is determined, and quality of the metadata is not evaluated. Consequently, quality when the original video is mapped onto the display device for display based on the metadata cannot be determined, and a problem of unstable display quality occurs.

In conclusion, in the foregoing detection manners, reliability of the metadata can only be evaluated from the perspective of metadata format. However, when data (one or a plurality of frames of images) of the original video is mapped onto the display device for display based on the metadata, picture quality of an image in the display device cannot be ensured.

Based on this, this application provides a metadata detection method. The method may be applied to a compute device, and the compute device may be an encoder side or a decoder side. The metadata detection method includes: The compute device obtains metadata of image data including one or a plurality of frames of images, and processes the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

Compared with a case in which only a type and a specification of the metadata are verified, in this application, the compute device may determine, by detecting the similarity between metadata of the two adjacent frames of images in the image data, a problem that picture flickering occurs during display of the image data in a case of a too large difference between the metadata of the two adjacent frames of images. In other words, in this application, a factor of display effect caused by the metadata is further considered, thereby improving a depth of detecting the metadata and ensuring picture quality during display of the image data. In addition, the compute device obtains the luminance mapping curve based on the metadata, and detects a geometric characteristic of the luminance mapping curve, to implement multi-dimensional detection on the metadata. In this way, a depth of detecting the metadata is further improved, and picture quality during display of the image data is ensured.

For example, the luminance mapping curve of the first image represents a correspondence between an original luminance value of a pixel in the first image and a display luminance value of the pixel when the first image is displayed.

When the compute device is an encoder side, the compute device may further output the detection result. When the compute device is a decoder side, the compute device performs an alarm based on the detection result.

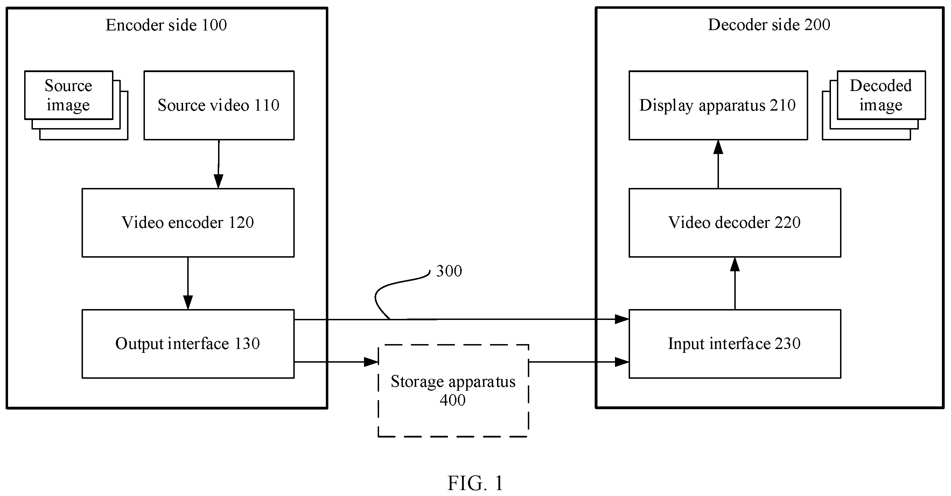

The metadata detection method provided in this application may be applied to the computer system shown in FIG. 1. FIG. 1 is a diagram of an application scenario of a computer system according to this application.

The computer system includes an encoder side 100 and a decoder side 200. The encoder side 100 generates an encoded video (or referred to as a bitstream). Therefore, the encoder side 100 may be referred to as a video encoding apparatus. The decoder side 200 may decode the bitstream (for example, image data including one or more frames of images) generated by the encoder side 100. Therefore, the decoder side 200 may be referred to as a video decoding apparatus. Various implementation solutions of the encoder side 100, the decoder side 200, or both may include one or more processors and a memory coupled to the one or more processors. The memory may include but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or any other medium that can be used to store desired program code in a form of instructions or a data structure and that can be accessed by a computer.

In the example in FIG. 1, the encoder side 100 includes a source video 110, a video encoder 120, and an output interface 130. In some examples, the output interface 130 may include a modulator/demodulator (a modem) and/or a transmitter. The source video 110 may obtain a video capture apparatus (for example, a camera), a video archive including a previously captured video, a video feed-in interface for receiving video from a video content provider, and/or a computer graphics system for generating a video, for example, an image rendering engine, or a combination of the foregoing video sources in the following manner.

For example, a Da Vinci® (davinci resolve) tool and a color grading system (baselight) tool may be deployed on the encoder side 100.

The video encoder 120 may encode a video (a plurality of source images) from the source video 110. In some examples, the encoder side 100 directly transmits a bitstream to the decoder side 200 through the output interface 130 via a link 300. In another example, the bitstream may be further stored in a storage apparatus 400 for later access by the decoder side 200 for decoding and/or playing. The bitstream includes metadata of the image data.

Metadata of a frame of image may include a maximum luminance value, a minimum luminance value, an average luminance value, and the like that correspond to the frame of image. Content included in the metadata is merely an example. In another embodiment of this application, the metadata of the frame of image may further include a parameter of several specified functions (such as an exponential function, a logarithmic function, a quadratic function, and a cubic spline function). The specified function and the parameter of the specified function are used to map a video onto a display device (for example, a display apparatus 210) for display.

In the example in FIG. 1, the decoder side 200 includes an input interface 230, a video decoder 220, and the display apparatus 210. In some examples, the input interface 230 includes a receiver and/or a modem. The input interface 230 may receive an encoded video via the link 300 and/or from the storage apparatus 400. The video decoder 220 decodes the received bitstream, to obtain a video (a plurality of decoded images). The display apparatus 210 may be integrated with the decoder side 200 or may be outside the decoder side 200. Usually, the display apparatus 210 displays a decoded video. The display apparatus 210 may include a plurality of types of display apparatuses, for example, a liquid crystal display (liquid crystal display, LCD), a plasma display, an organic light-emitting diode (organic light-emitting diode, OLED) display, or another type of display apparatus.

For example, after obtaining the video, the encoder side 100 may generate metadata corresponding to each frame of image in the video, and when encoding the video, the video encoder 120 on the encoder side 100 encodes the metadata together to obtain a bitstream.

In addition, after obtaining the bitstream, the decoder side 200 processes, based on a detection policy, the metadata corresponding to the image data carried in the bitstream, to obtain a detection result.

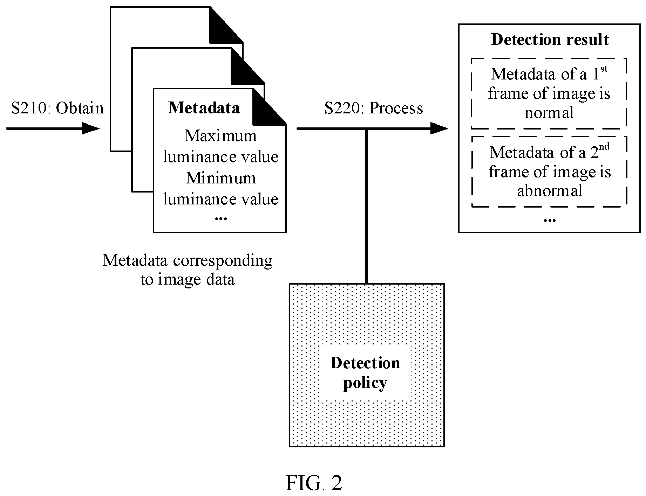

According to one aspect, this application provides a metadata detection method. The metadata detection method may be applied to the computer system shown in FIG. 1. FIG. 2 is a schematic flowchart 1 of a metadata detection method according to this application. The metadata detection method may be performed by a first compute device 310. The first compute device 310 may be an encoder side 100 in FIG. 1. A metadata editing tool (for example, Da Vinci® or baselight) is deployed in the first compute device 310. As shown in FIG. 2, the metadata detection method may include steps S210 and S220.

S210: The first compute device 310 obtains metadata of image data.

The image data includes one or a plurality of frames of images. The image data may be referred to as a video when the image data includes a plurality of frames of images.

In a possible implementation, that the first compute device 310 obtains the metadata of the image data includes: The first compute device 310 generates metadata of each frame of image in the video based on the obtained video.

For example, the first compute device 310 may obtain the video from a memory, or a video capture apparatus (for example, a camera) built in or externally connected to the first compute device 310 obtains the video. The foregoing manner of obtaining the video is merely an example of this application. In another embodiment of this application, a video obtained through rendering by the image rendering engine may be further obtained.

In a possible example, that the first compute device 310 generates the metadata of each frame of image in the video based on the obtained video includes: The first compute device 310 may generate the metadata of the video based on a Da Vinci® tool deployed on the first compute device 310, to obtain the metadata corresponding to each frame of image in the video.

For example, the first compute device 310 imports the video into the Da Vinci® tool, and defines, in the Da Vinci® tool, a type of metadata that needs to be generated, to output the metadata of the video. Alternatively, the Da Vinci® tool outputs an edited video while outputting the metadata of the video.

In another possible example, that the first compute device 310 generates the metadata of each frame of image in the video based on the obtained video includes: The first compute device 310 may generate the metadata of the video based on a baselight tool deployed on the first compute device 310, to obtain the metadata of each frame of image in the video.

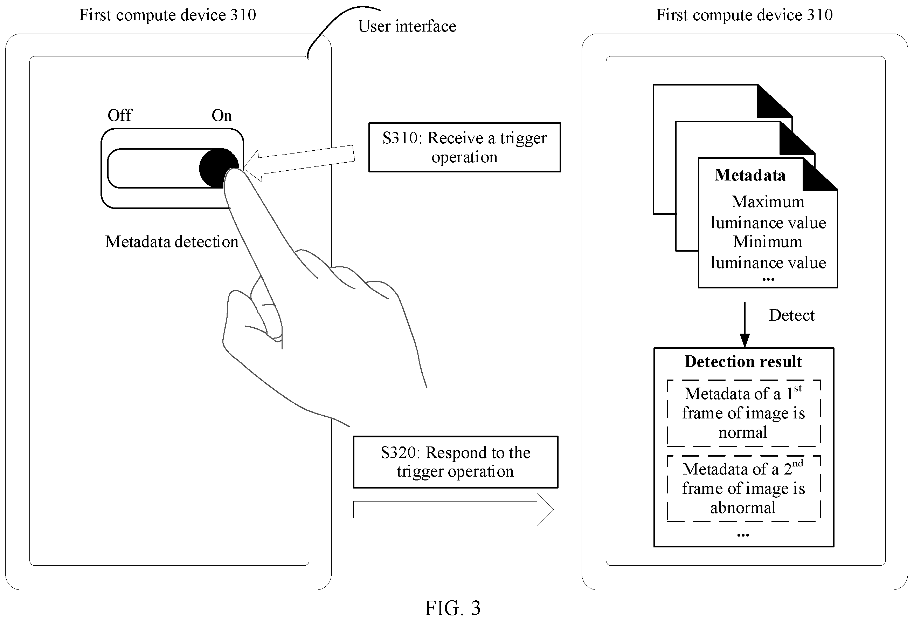

For the foregoing content in which the first compute device 310 obtains the metadata of the image data, the following provides a possible embodiment. As shown in FIG. 3, FIG. 3 is a diagram of an image user interface according to this application. S210 in FIG. 2 may include steps S310 and S320.

S310: The first compute device 310 receives a trigger operation performed by a user on a control component in a user interface.

The user interface includes a control component for metadata detection.

As shown in FIG. 3, the control component for metadata detection in the user interface may be in a plurality of forms, for example, in a square shape or a switch shape. This is not limited in this application. The control component is configured to indicate to determine whether to generate the metadata of each frame of image in the video.

In a possible example, the first compute device 310 may display the user interface at a front end. The front end herein may be a display connected to the first compute device 310, a display screen of the first compute device 310, or the like. This is not limited in this application.

In a possible implementation, that the first compute device 310 receives the trigger operation performed by the user on the control component includes: The first compute device 310 obtains the trigger operation performed by the user on the control component in the user interface through various input devices (for example, a keyboard, a mouse, and a touchscreen).

For a specific implementation of the trigger operation, the following provides three possible examples.

Example 1: The trigger operation may be that the user confirms the control component for metadata detection by using the keyboard. For example, the trigger operation is a confirmation (enter) key triggered by the user.

Example 2: The trigger operation may be that the user clicks the control component for metadata detection by using the mouse.

Example 3: The trigger operation may be that the user performs a tap operation, a slide operation, or the like on the control component for metadata detection on the touchscreen.

The foregoing examples are merely optional implementations provided in this embodiment, and should not be understood as a limitation on this application. In another embodiment of this application, the trigger operation may alternatively be a mid-air operation, voice control, or the like.

S320: The first compute device 310 obtains the metadata of the image data in response to the trigger operation performed by the user on the control component.

In response to the trigger operation performed by the user on the control component through various input devices, the first compute device 310 determines to generate the metadata of each frame of image in the video, and performs the metadata detection method shown in FIG. 2.

For content in which the first compute device 310 generates the metadata of each frame of image in the video, refer to the descriptions of S210. Details are not described herein again.

In this application, the first compute device 310 interacts with the user through the user interface, to determine whether the user needs to perform quality detection on the metadata. In this way, while visualization is implemented, a degree of freedom in processing is improved by determining, based on a user requirement, whether to perform quality detection on the metadata.

Still as shown in FIG. 2, the metadata detection method provided in this embodiment further includes step S220.

S220: The first compute device 310 processes the metadata of the image data based on a detection policy, to obtain a detection result.

In a possible embodiment, the detection policy indicates the first compute device 310 to determine a similarity between metadata of two adjacent frames of images in the plurality of frames of images.

When the similarity between the metadata of the two adjacent frames of images is greater than a first threshold (the first threshold may also be referred to as a threshold 1, and the threshold 1 may be 0.85), the first compute device 310 determines that a detection result of the two adjacent frames of images is normal. When the similarity between the metadata of the two adjacent frames of images is less than a threshold 1, the first compute device 310 determines that a detection result of the two adjacent frames of images is abnormal. When the similarity between the metadata of the two adjacent frames of images is equal to a threshold 1, the first compute device 310 may determine, based on a user requirement, that a detection result of the two adjacent frames of images is normal or abnormal. This is not limited herein.

The similarity between the metadata of the two adjacent frames of images may be a similarity between at least one piece of metadata of the two adjacent frames of images, or a similarity between luminance mapping curves corresponding to the two adjacent frames of images. A luminance mapping curve of a first image is obtained based on metadata of the first image, and the luminance mapping curve indicates a correspondence between an original luminance value of a pixel in the first image and a display luminance value of the pixel when the first image is displayed. A device that displays the first image is a display device, and the display device may be the decoder side in FIG. 1. The first image is any frame of image in the image data.

For example, the original luminance value indicates original luminance of the pixel in each frame of image in the video when the first compute device 310 obtains the video. The display luminance value indicates luminance of a pixel displayed by the display device when the video is mapped onto the display device for display.

In a possible implementation, the first compute device 310 calculates the similarity between the at least one piece of metadata of the two adjacent frames of images.

A manner of calculating the similarity by the first compute device 310 may be calculating a distance between the at least one piece of metadata of the two adjacent frames of images. For example, the first compute device 310 calculates the distance between the at least one piece of metadata of the two adjacent frames of images based on a Euclidean distance, a Manhattan distance, a Chebyshev distance, or the like.

If the distance between the at least one piece of metadata of the two adjacent frames of images is greater than a preset distance, it is determined that the detection result of the two adjacent frames of images is abnormal; or if the distance between the at least one piece of metadata of the two adjacent frames of images is less than a preset distance, it is determined that the detection result of the two adjacent frames of images is normal; or if the distance between the at least one piece of metadata of the two adjacent frames of images is equal to a preset distance, it is determined, based on the user requirement, that the detection result of the two adjacent frames of images is normal or abnormal.

For example, the at least one piece of metadata includes a maximum luminance value and a minimum luminance value, a maximum luminance value and a minimum luminance value of a $1^{st}$ frame of image in the two adjacent frames of images are respectively 4000 and 500, and a maximum luminance value and a minimum luminance value of a $2^{nd}$ frame of image in the two adjacent frames of images are respectively 4200 and 520. The first compute device 310 determines the similarity between the metadata of the two adjacent frames of images based on the maximum luminance values and the minimum luminance values of the two adjacent frames of images, that is, determines a distance between (4000, 500) and (4200, 520).

In another possible implementation, the first compute device 310 calculates the similarity between the luminance mapping curves that is determined based on the metadata of the two adjacent frames of images.

The first compute device 310 may determine the similarity between the luminance mapping curves corresponding to the two adjacent frames of images based on a fréchet distance (fréchet distance), dynamic time warping (dynamic time warping, DTW), or the like.

The fréchet distance is defined as a maximum value in the following process: selecting a point on one curve, selecting a point on another curve, and then connecting the two points, to form a connection line segment. A location and a length of the connection line segment are restricted by a sequence of the points on the two curves. The fréchet distance is a maximum value that makes the connection line segment in the process shortest. A smaller fréchet distance identifies that the two curves are more similar.

A basic idea of DTW is to align two time series (curves), to minimize a distance between the two time series and meet a strict monotonicity and smoothness restriction. Specifically, DTW calculates a distance matrix between the two series, and searches for an optimal path in a dynamic planning method, that is, provides a measure for a similarity between the two series.

In a possible case, when the similarity between the luminance mapping curves of the two adjacent frames of images is less than the threshold 1, the first compute device 310 determines that metadata of one of the two adjacent frames of images is abnormal. In other words, content indicated by the detection result is that metadata of one of the two adjacent frames of images is abnormal. When the similarity between the luminance mapping curves of the two adjacent frames of images is greater than the threshold 1, the first compute device 310 determines that the metadata of the two adjacent frames of images is normal. In other words, content indicated by the detection result is that the metadata of the two adjacent frames of images is normal.

When the similarity between the luminance mapping curves of the two adjacent frames of images is equal to the threshold 1, the first compute device 310 determines that the metadata of the two adjacent frames of images is normal or abnormal. This is not limited in this application.

In a possible example, one of the two adjacent frames of images indicates a latter frame of image in the two adjacent frames of images.

In this application, because the luminance mapping curve indicates the correspondence between the original luminance value of the pixel in the first image and the display luminance value of the pixel when the first image is displayed, a complete mapping relationship when the image is mapped onto the display device for display is shown. Therefore, the first compute device 310 may detect, by detecting quality of the metadata based on complete mapping relationships respectively corresponding to the two adjacent frames of images, whether picture flickering occurs when the display device displays the two adjacent frames of images. This avoids verifying only the type or the specification of the metadata, improves a depth of detecting the quality of the metadata, namely, reliability of the metadata, and ensures quality when the display device displays the video.

In a possible case, the following shows three examples of obtaining a corresponding luminance mapping curve based on the metadata of each frame of image.

Example 1: The metadata includes only several luminance features of each frame of image, for example, a maximum luminance value, a minimum luminance value, and average luminance. The first compute device 310 uses the luminance features of each frame of image as a horizontal coordinate, a vertical coordinate corresponds to luminance information (for example, a maximum luminance value, a minimum luminance value, and an average luminance value) of the display device, and the foregoing plurality of points are smoothly connected based on a preset function, to obtain a luminance mapping curve.

The preset curve may be a catmull-Rom spline curve (catmull-Rom spline), a bézier curve (bézier curve), or the like.

The catmull-Rom spline is a curve used for interpolation of a control point. The catmull-Rom spline can produce a smooth and natural curve, and therefore, is widely used in computer graphics, animation, and another related field.

The bézier curve is a mathematical curve that may describe a smooth curve. The bézier curve describes a shape of the curve by defining a start point (for example, the minimum luminance value), an end point (for example, the maximum luminance value), and a control point (for example, the average luminance value). The start point and the end point are end points of the curve, and the control point determines bending and the shape of the curve.

Example 2: In addition to the luminance feature in Example 1, the metadata further includes a parameter of several specified functions (such as an exponential function, a logarithmic function, a quadratic function, and a cubic spline function), and the parameter of the specified function is used to adjust luminance, chrominance, and the like of the video. The first compute device 310 generates the luminance mapping curve based on the parameter of the function and the corresponding function.

For example, if the metadata indicates the exponential function and a parameter corresponding to the exponential function, the first compute device 310 may accurately determine the luminance mapping curve based on the exponential function and the parameter corresponding to the exponential function.

Example 3 is a combination of Example 1 and Example 2. Details are not described herein again.

The foregoing content is merely optional examples provided in this embodiment, and should not be understood as a limitation on this application.

In a possible embodiment, the detection policy further indicates the first compute device 310 to detect a geometric characteristic of the luminance mapping curve of the image data.

In this embodiment, the first compute device 310 mainly detects at least one of continuity, monotonicity, and rationality in the geometric characteristic of the mapping curve.

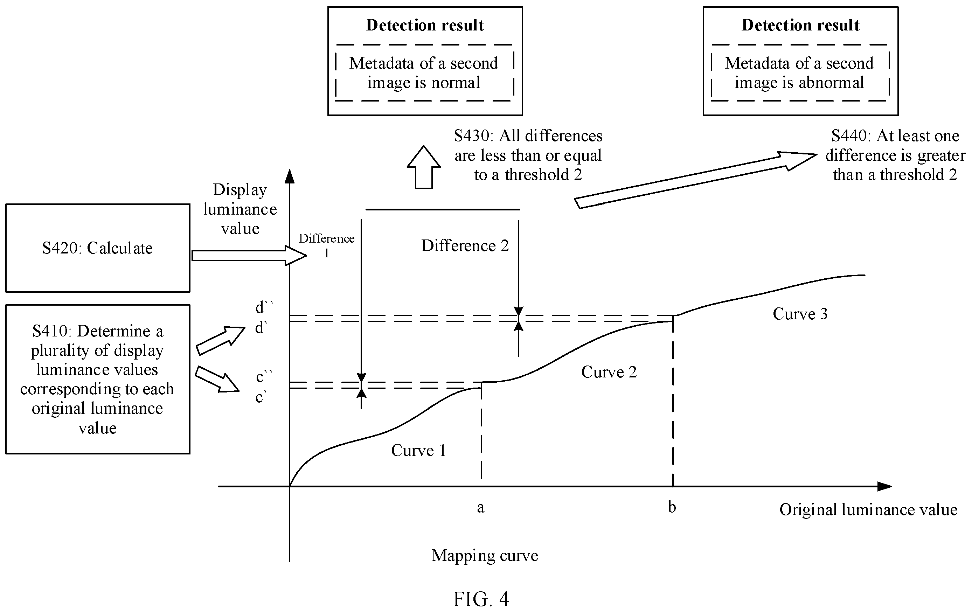

Continuity indicates whether a plurality of segments of curves included in the luminance mapping curve are continuous. To be specific, whether a difference between two adjacent segments of curves at a same horizontal coordinate is less than a second threshold. For content in which the first compute device 310 detects continuity of the luminance mapping curve, refer to content shown in FIG. 4. Details are not described herein again.

In a possible example, a horizontal coordinate of the luminance mapping curve indicates an original luminance value, and a vertical coordinate of the luminance mapping curve indicates a display luminance value.

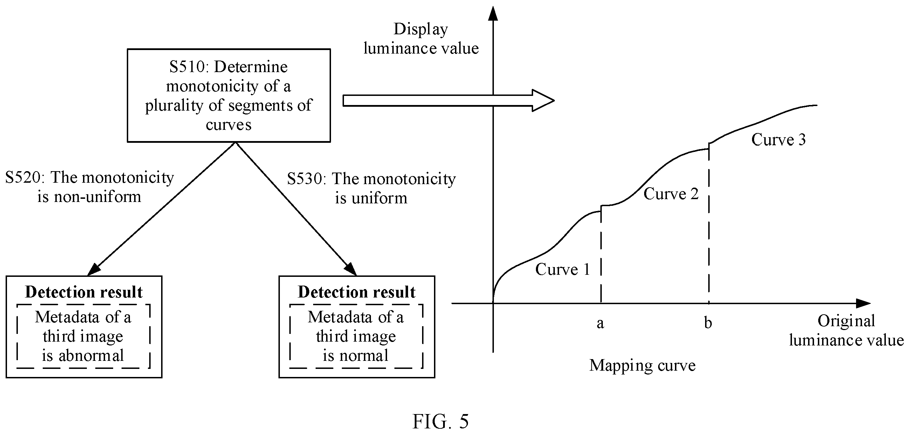

Monotonicity indicates whether the plurality of segments of curves included in the luminance mapping curve all progressively increase or progressively decrease. For content in which the first compute device 310 detects monotonicity of the luminance mapping curve, refer to content shown in FIG. 5. Details are not described herein again.

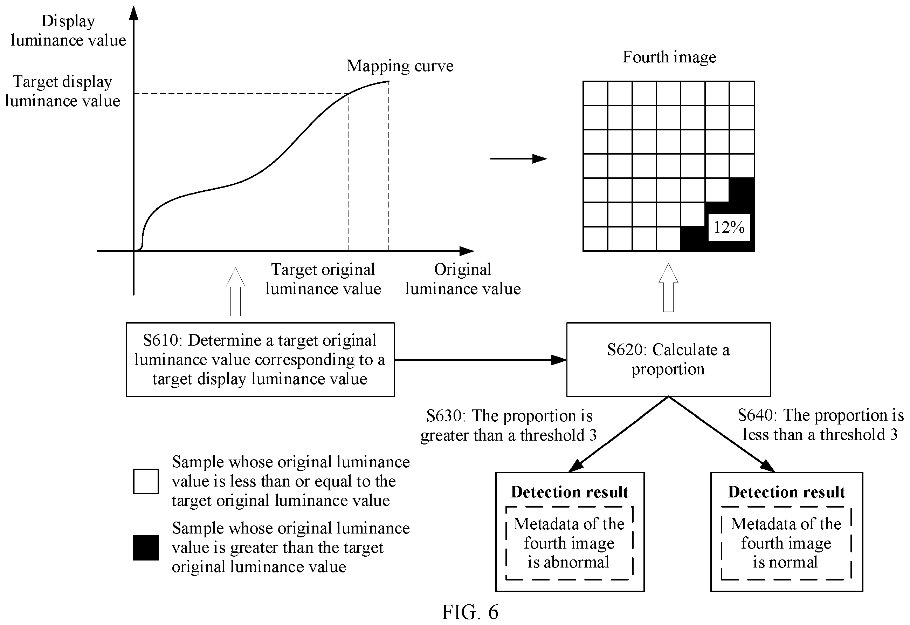

Rationality indicates whether a luminance value greater than or less than a target original luminance value corresponding to a target display luminance value exists in the luminance mapping curve. For content in which the first compute device 310 detects rationality of the luminance mapping curve, refer to content shown in FIG. 6. Details are not described herein again.

In this application, the first compute device 310 detects at least one of continuity, monotonicity, and rationality of luminance mapping curves of the plurality of frames of images, to implement multi-dimensional detection on the metadata. In this way, a depth of detecting quality of the metadata is improved, and picture quality when the image is displayed is ensured.

In a possible embodiment, the first compute device 310 may output a detection result to a front end, so that the front end can display the detection result. The front end herein may be a display connected to the first compute device 310, a display screen of the first compute device 310, or the like. This is not limited in this application.

The detection result may include a status of the metadata of each frame of image in the video. For example, metadata of a 1st frame of image is normal, or metadata of a 2nd frame of image is abnormal.

In a possible example, the detection result may further include a specific status of the metadata of each frame of image. For example, at least one of continuity, monotonicity, and rationality of a luminance mapping curve corresponding to the 1st frame of image is abnormal, or picture flickering occurs in the 2nd frame of image. In other words, a similarity between metadata of the 1st frame of image and metadata of the 2nd frame of image is less than or equal to a threshold 1.

In another possible example, the detection result may further include: marking one or a plurality of frames of images whose metadata is abnormal. In other words, a marked image is an image whose metadata is abnormal.

In a possible embodiment, the first compute device 310 may determine, based on content of the detection result, to update the metadata of the one or the plurality of frames of images whose metadata is abnormal.

In a possible implementation, if the first compute device 310 determines the one or the plurality of frames of images whose metadata is abnormal in the detection result, the first compute device 310 regenerates metadata based on the one or the plurality of frames of images whose metadata is abnormal.

For example, the first compute device 310 indicates a metadata editing tool to regenerate the metadata based on the one or the plurality of frames of images whose metadata is abnormal.

In another optional implementation, if the first compute device 310 determines that the detection result indicates that one or a plurality of frames of images whose metadata is abnormal exist, the first compute device 310 indicates the metadata editing tool to regenerate the metadata corresponding to each frame of image in the video based on the video.

For the foregoing method for regenerating the metadata, refer to content of obtaining the metadata in S210. Details are not described herein again.

In this application, the first compute device 310 determines the similarity between the metadata of the two adjacent frames of images in the plurality of frames of images, and/or detects the geometric characteristic of the luminance mapping curve of the image data, to detect the quality of the metadata from a plurality of dimensions, thereby improving a depth of detecting the quality of the metadata, namely, reliability of the metadata, and ensuring quality when the display device displays the image. In addition, abnormal metadata is regenerated based on the detection result, thereby further ensuring picture quality when the display device displays the image.

To detect continuity of the mapping curve of each frame of image, the following provides a possible implementation. FIG. 4 is a schematic flowchart 1 of a geometric characteristic detection method according to this application. A luminance mapping curve corresponding to a second image includes a plurality of segments of curves, the second image is any frame of image in the image data, and the second threshold may be referred to as a threshold 2. S220 in FIG. 2 may include steps S410 to S440.

S410: The first compute device 310 determines a plurality of display luminance values that correspond to the plurality of segments of curves corresponding to the second image at each of the plurality of original luminance values.

As shown in FIG. 4, a luminance mapping curve of the second image has three segments of curves. The first compute device 310 determines that there is an overlapping horizontal coordinate between horizontal coordinate sets corresponding to two segments of adjacent curves. The overlapping horizontal coordinate is the original luminance value, for example, an original luminance value a and an original luminance value b. The first compute device 310 determines a display luminance value c' on a curve 1 and a display luminance value c'' on a curve 2 at the original luminance value a.

Similarly, the first compute device 310 determines a display luminance value d' on the curve 2 and a display luminance value d'' on a curve 3 at the original luminance value b.

S420: The first compute device 310 calculates a difference between the plurality of display luminance values.

One of the plurality of original luminance values is used as an example. The luminance mapping curve corresponds to a plurality of display luminance values at the original luminance value. The first compute device 310 determines a difference between the plurality of display luminance values.

For example, the first compute device 310 determines a difference 1 between the display luminance value c' and the display luminance value c'', and a difference 2 between the display luminance value d' and the display luminance value d''.

S430: If all differences are less than or equal to a threshold 2, the detection result indicates that metadata of the second image is normal.

The first compute device 310 compares differences respectively corresponding to the plurality of original luminance values with the threshold 2, and when the differences are all less than or equal to the threshold 2, determines that the detection result indicates that the metadata of the second image is normal.

For example, comparison is performed between the difference 1 and the threshold 2 (for example, 30 nits) and between the difference 2 and the threshold 2. If both the difference 1 and the difference 2 are less than or equal to the threshold 2, the detection result indicates that the metadata of the second image is normal.

S440: If at least one difference is greater than the threshold 2, the detection result indicates that the metadata of the second image is abnormal.

The first compute device 310 compares the differences respectively corresponding to the plurality of original luminance values with the threshold 2, and when one of the differences is greater than the threshold 2, determines that the detection result indicates that the metadata of the second image is abnormal.

For example, if at least one of difference 1 and difference 2 is greater than the threshold 2, it is determined that the detection result indicates that the metadata of the second image is abnormal.

In this application, the first compute device 310 detects continuity of the luminance mapping curve, to avoid a problem that the luminance mapping curve corresponding to the metadata is discontinuous and a picture is broken when the display device displays the image, thereby ensuring picture quality when the image is displayed.

To detect monotonicity of the luminance mapping curve of each frame of image, the following provides a possible implementation. FIG. 5 is a schematic flowchart 2 of a geometric characteristic detection method according to this application. A luminance mapping curve corresponding to a third image includes a plurality of segments of curves, and the third image is any frame of image in the image data. S220 in FIG. 2 may include steps S510 to S530.

S510: The first compute device 310 determines monotonicity of the plurality of segments of curves corresponding to the third image.

As shown in FIG. 5, the first compute device 310 may perform derivation on three segments of curves (a curve 1, a curve 2, and a curve 3) corresponding to the third image, to obtain a derivation result. For example, the derivation result may be a specific value or function, and the first compute device 310 determines whether the specific value or function is greater than 0 or less than 0. If the derivation result is greater than 0, the segment of curve monotonically and progressively increases; or if the derivation result is less than 0, the segment of curve monotonically and progressively decreases.

S520: If the first compute device 310 determines that the monotonicity corresponding to the plurality of segments of curves is non-uniform, the detection result indicates that metadata of the third image is abnormal.

When not all the three curves shown in FIG. 5 monotonically and progressively decrease (all derivation results are less than 0) or monotonically and progressively increase (all derivation results are greater than 0), the first compute device 310 determines that monotonicity of the luminance mapping curve corresponding to the third image is non-uniform, and the detection result indicates that the metadata of the third image is abnormal.

S530: If the first compute device 310 determines that the monotonicity corresponding to the plurality of segments of curves is uniform, the detection result indicates that metadata of the third image is normal.

When all the three curves shown in FIG. 5 monotonically and progressively decrease or monotonically and progressively increase, the first compute device 310 determines that monotonicity of the luminance mapping curve corresponding to the third image is uniform, and the detection result indicates that the metadata of the third image is normal.

In this application, the first compute device 310 detects the monotonicity of the luminance mapping curve, to avoid a problem that the corresponding display luminance value is small when the original luminance value is large, or the corresponding display luminance value is large when the original luminance value is small, namely, luminance inversion, thereby ensuring picture quality when the image is displayed.

To detect rationality of the luminance mapping curve of each frame of image, the following provides a possible implementation. FIG. 6 is a schematic flowchart 3 of a geometric characteristic detection method according to this application. A fourth image is any frame in the image data, and a third threshold may be referred to as a threshold 3. S220 in FIG. 2 may include steps S610 to S640.

S610: The first compute device 310 determines a target original luminance value corresponding to a target display luminance value in a luminance mapping curve corresponding to the fourth image.

For example, the target display luminance value may be a maximum display luminance value or a minimum display luminance value that may be displayed by the display device.

An example in which a maximum display luminance value in the maximum display luminance value or the minimum display luminance value that may be displayed by the display device is the target display luminance value is used for description. The first compute device 310 determines a first original luminance value (the target original luminance value) corresponding to the maximum display luminance value in the luminance mapping curve corresponding to the fourth image.

S620: The first compute device 310 calculates a proportion of a quantity of pixels with an original luminance value greater than or less than the target original luminance value in the fourth image to a total quantity of pixels in the fourth image.

If the target display luminance value is the maximum display luminance value, the first compute device 310 may determine a value a greater than the first original luminance value corresponding to the maximum display luminance value from the luminance mapping curve corresponding to the fourth image. There may be one or more values a.

The first compute device 310 determines, from the fourth image, a quantity 1 of pixels whose original luminance values are the value a, and then calculates a ratio of the quantity 1 to the total quantity of pixels corresponding to the fourth image, namely, a proportion.

As shown in FIG. 6, the maximum display luminance value is 500 nits. The first compute device 310 determines that the first original luminance value corresponding to the maximum display luminance value in the luminance mapping curve is 5000 nits, and then determines a luminance value greater than the first original luminance value in the luminance mapping curve, for example, 5500 nits. The first compute device 310 determines that a quantity of pixels whose luminance values are 5500 nits in the fourth image is 300, and the total quantity of pixels in the fourth image is 1920*1080=2073600, to obtain a proportion 300/2073600 that is approximately equal to 0.014%.

In a possible example, the first compute device 310 may directly determine, from the fourth image, a quantity of pixels whose original luminance values are greater than the first original luminance value, to obtain the quantity 1.

Similarly, if the target display luminance value is the minimum display luminance value, the first compute device 310 may determine a value b less than a second original luminance value corresponding to the minimum display luminance value from the luminance mapping curve corresponding to the fourth image. There may be one or more values b.

The first compute device 310 determines, from the fourth image, a quantity 2 of pixels whose original luminance values are the value b, and then calculates a ratio of the quantity 2 to the total quantity of pixels corresponding to the fourth image, namely, a proportion.

As shown in FIG. 6, the minimum display luminance value is 1 nit. The first compute device 310 determines that the second original luminance value corresponding to the minimum display luminance value in the luminance mapping curve is 0.1 nits, and then determines luminance less than the second original luminance value in the luminance mapping curve, for example, 0.05 nits. The first compute device 310 determines that a quantity of pixels whose luminance values are 0.05 nits in the fourth image is 300, and the total quantity of pixels in the fourth image is 1920*1080=2073600, to obtain a proportion 300/2073600 that is approximately equal to 0.014%.

In a possible example, when determining the quantity 2, the first compute device 310 may directly determine, from the fourth image, a quantity of pixels whose luminance values are less than the second original luminance value, to obtain the quantity 2.

In a possible embodiment, the target original luminance value may be a maximum display luminance value preset by the user, or a minimum display luminance value preset by the user.

S630: If the first compute device 310 determines that the proportion is greater than the threshold 3, the detection result indicates that metadata of the fourth image is abnormal.

For example, the first compute device 310 compares the proportion obtained through calculation with the threshold 3 (for example, 0.02%). If the proportion is less than the third threshold, the detection result indicates that the metadata of the fourth image is normal.

S640: If the first compute device 310 determines that the proportion is less than the threshold 3, the detection result indicates that metadata of the fourth image is normal.

For example, if the proportion is greater than the threshold 3, the detection result indicates that the metadata of the fourth image is abnormal.

In a possible example, when the ratio of the quantity 1 to the total quantity of pixels corresponding to the fourth image and the ratio of the quantity 2 to the total quantity of pixels corresponding to the fourth image are both less than the third threshold, it indicates that the metadata of the fourth image is normal. On the contrary, if at least one of the two ratios is greater than the third threshold, it indicates that the metadata of the fourth image is abnormal.

In a possible case, if the proportion is equal to the threshold 3, the detection result indicates that the metadata of the fourth image is normal or abnormal. This is not limited in this application.

In this application, the first compute device 310 detects rationality (luminance rationality) of the luminance mapping curve, that is, detects whether an original luminance value corresponds to no display luminance value in the luminance mapping curve, to avoid a problem that luminance of a part of pixels is missing (that is, not displayed) when the display device displays the video, thereby ensuring picture quality when the image is displayed.

In a possible embodiment, the metadata further includes a scene switch identifier, and an image whose metadata includes a scene switch identifier is a scene switch frame. If one or a plurality of frames of images whose metadata is abnormal as indicated by the detection result are scene switch frames, the first compute device 310 updates, to that the metadata is normal, the one or the plurality of frames of images whose metadata is abnormal as indicated by the detection result. The scene switch frame is a last frame of image in a plurality of adjacent frames of images with a similarity less than or equal to a fourth threshold.

In a possible example, when determining that one or a plurality of frames of images whose metadata is abnormal are scene switch frames, the first compute device 310 updates, to that the metadata of the one or the plurality of frames of images is normal, only a detection result of the one or the plurality of frames of images whose metadata is abnormal.

In this application, because scene switching occurs in the video, it is normal that a sudden change of luminance, or the like occurs during scene switching. In other words, when a frame of image is a scene switch frame, it is allowed, namely, normal, that metadata of the scene switch frame is abnormal. The first compute device 310 sets a detection result corresponding to the scene switch frame to normal, which conforms to a scene switching rule.

In a possible embodiment, in S210, the first compute device 310 obtains metadata of image data between two scene switch frames. In other words, when performing the foregoing quality detection, the first compute device 310 detects only the metadata of the image data between the two scene switch frames, thereby reducing a data calculation amount and improving data efficiency.

The following provides two possible determining manners for the scene switch frame.

In an optional implementation, the first compute device 310 may determine the scene switch frame based on whether the metadata of each frame of image includes the scene switch identifier. The first compute device 310 obtains a scene switch identifier included in metadata of a fifth image. The scene switch identifier indicates that the fifth image is a scene switch frame, and the fifth image is any frame of image in the image data.

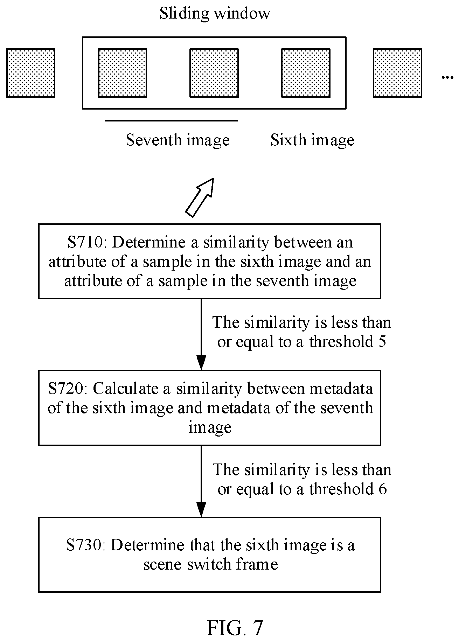

In another optional implementation, FIG. 7 is a schematic flowchart of a scene switch frame determining method according to this application. A sixth image and a seventh image are any frames of images in the image data of the video, a fifth threshold may also be referred to as a threshold 5, and a sixth threshold may also be referred to as a threshold 6. The method may include steps S710 to S730.

S710: The first compute device 310 determines a similarity between an attribute of a pixel in the sixth image and an attribute of a pixel in the seventh image.

The sixth image and the seventh image are located in a same sliding window, and the seventh image is one or a plurality of frames of images adjacent to the sixth image.

The attribute of the pixel may include data such as a luminance value (nit) and luminance-chrominance (YUV) of the pixel. In the YUV, "Y" indicates luminance (luminance or luma), and "U" and "V" indicate chrominance (chrominance or chroma).

The following provides a plurality of similarity calculation manners: a Pearson correlation coefficient (Pearson correlation coefficient), a Spearman correlation coefficient (spearman correlation coefficient), and a coefficient of determination (coefficient of determination).

The Pearson correlation coefficient is a statistic for measuring a linear correlation between two pieces of data.

The Spearman correlation coefficient is a method for measuring a correlation between data, but it does not require the data to be in a linear relationship.

Coefficient of determination: The coefficient of determination measures a degree of interpretation of one piece of data on another piece of data by calculating a square of the Pearson correlation coefficient.

An example in which the similarity calculation manner is the Pearson correlation coefficient in the Pearson correlation coefficient, the Spearman correlation coefficient, and the coefficient of determination is used for description. The first compute device 310 determines a Pearson correlation coefficient between the attribute (for example, a luminance value) of the pixel in the sixth image and an attribute of a pixel in a previous frame of image (the seventh image) of the sixth image in the video, for example, performs calculation based on the following formula:

$$r = \frac{\sum\limits_{i=1}^{n} \left(X_i - \overline{X}\right)\left(Y_i - \overline{Y}\right)}{\sqrt{\sum\limits_{i=1}^{n} \left(X_i - \overline{X}\right)^2} \sqrt{\sum\limits_{i=1}^{n} \left(Y_i - \overline{Y}\right)}}$$

Herein, $X_i$ may represent a luminance value of an $i^{th}$ pixel in the sixth image, $Y_i$ may represent a luminance value of an $i^{th}$ pixel in the seventh image, a location of a pixel corresponding to $X_i$ in the sixth image is the same as a location of a pixel corresponding to $Y_i$ in the seventh image, $\overline{X}$ may represent an average luminance value of all pixels in the sixth image, and $\overline{Y}$ may represent an average luminance value of all pixels in the seventh image.

The foregoing example is described by using an example in which a size of the sliding window is two frames. In another embodiment of this application, the sliding window may be three frames, five frames, or the like. The size of the sliding window may be set by the user according to a requirement. This is not limited in this application. A plurality of frames of images in the sliding window are a plurality of adjacent frames of images, and the plurality of adjacent frames of images are a plurality of images that continuously appear when the video is played.

In another embodiment of this application, the first compute device 310 determines a similarity between a luminance value of a pixel in the sixth image and a luminance value of a pixel in the seventh image, and a similarity between YUV of the pixel in the sixth image and YUV of the pixel in the seventh image.

For a case in which the first compute device 310 determines the similarity between the luminance value of the pixel in the sixth image and the luminance value of the pixel in the seventh feature, and the similarity between the YUV of the pixel in the sixth image and the YUV of the pixel in the seventh feature, refer to the foregoing content of determining the luminance value of the pixel in the sixth image and the luminance value of the pixel in the seventh image. Details are not described herein again.

The similarity between the attribute of the pixel in the sixth image and the attribute of the pixel in the seventh image is less than or equal to the threshold 5 only when both the similarity between the luminance value of the pixel in the sixth image and the luminance value of the pixel in the seventh feature and the similarity between the YUV of the pixel in the sixth image and the YUV of the pixel in the seventh feature are less than or equal to the threshold 5.

S720: The first compute device 310 calculates a similarity between metadata of the sixth image and metadata of the seventh image.

When the similarity between the attribute of the pixel in the sixth image and the attribute of the pixel in the seventh image is less than or equal to the threshold 5, the first compute device 310 calculates the similarity between the metadata of the sixth image and the metadata of the seventh image, namely, a change amount between the metadata of the sixth image and the metadata of the seventh image.

In a possible example, the first compute device 310 compares the similarity between the attribute of the pixel in the sixth image and the attribute of the pixel in the seventh image with the threshold 5 (for example, 0.8). When the similarity is greater than the threshold 5, it indicates that the sixth image in the sliding window is a non-scene switch frame. When the similarity is less than or equal to the threshold 5, the sixth image further needs to be determined. In other words, the similarity between the metadata of the sixth image and the metadata of the seventh image is calculated.

For content of a case in which the first compute device 310 calculates a similarity between the metadata of the sixth image and metadata of one or a plurality of frames of images adjacent to the sixth image, refer to the content in S220. Details are not described herein again.

For example, the first compute device 310 calculates a similarity between the metadata of the sixth image and metadata of each of one or a plurality of frames of images indicated by the seventh image.

S730: The first compute device 310 determines that the sixth image is a scene switch frame.

The similarity between the metadata of the sixth image and the metadata of the seventh image is less than or equal to the threshold 6. In other words, the similarity between the metadata of the sixth image and the metadata of the one or the plurality of frames of images adjacent to the sixth image is less than or equal to the threshold 6.

For example, when the similarity between the metadata of the sixth image and the metadata of the one or the plurality of frames of images adjacent to the sixth image is less than or equal to the threshold 6 (for example, 0.8), the first compute device 310 determines that the sixth image is a scene switch frame.

If a similarity between the metadata of the sixth image and the metadata of the one or the plurality of frames of images adjacent to the sixth image is greater than the threshold 6, the first compute device 310 determines that the sixth image is a non-scene switch frame.

In this application, the first compute device 310 determines the scene switch frame from the plurality of frames of images of the video based on a similarity between attributes of pixels and a similarity between metadata, and may refer to the scene switch frame when determining abnormal metadata. To be specific, when a luminance mapping curve corresponding to the metadata of the scene switch frame has non-uniform monotonicity, inconsistent continuity, and the like, the metadata of the scene switch frame is still normal, thereby improving accuracy of determining the abnormal metadata.

In a possible embodiment, before executing content shown in FIG. 7, the first compute device 310 may perform down-sampling processing on each frame of image in the video, to reduce resolution and improve processing efficiency.

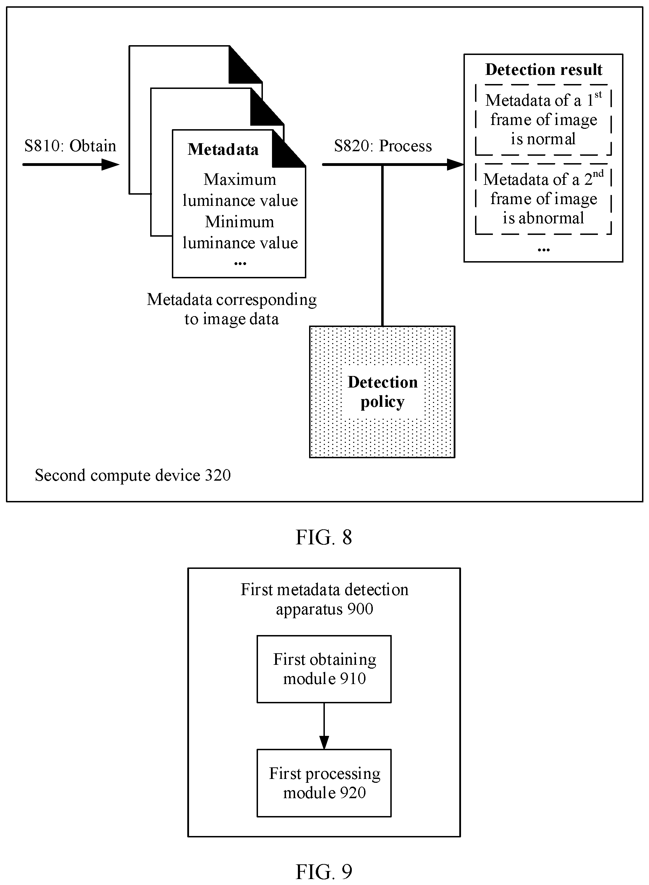

In addition, to avoid a metadata error in a bitstream transmission process and a video decoding process, this application provides a metadata detection method. The metadata detection method may be applied to the computer system shown in FIG. 1. FIG. 8 is a schematic flowchart 2 of a metadata detection method according to this application. The metadata detection method may be performed by a second compute device 320, and the second compute device 320 may be the decoder side 200 in FIG. 1. As shown in FIG. 8, the metadata detection method may include steps S810 and S820.

S810: The second compute device 320 obtains metadata of image data.

The second compute device 320 receives a bitstream sent by a first compute device 310, or obtains a stored bitstream from a storage apparatus 400. The bitstream includes encoded image data and metadata corresponding to the image data. The second compute device 320 decodes the bitstream, to obtain the metadata of the image data. The image data includes one or a plurality of frames of images.

In a possible example, the second compute device 320 decodes the bitstream by using a video decoder 220, to obtain metadata of a plurality of frames of images in a video.

S820: The second compute device 320 processes the metadata of the image data based on a detection policy, to obtain a detection result.

The detection policy indicates to determine a similarity between metadata of two adjacent frames of images in the plurality of frames of images, and/or detect a geometric characteristic of a luminance mapping curve of the image data. A luminance mapping curve of a first image is obtained based on metadata of the first image, and the first image is any frame of image in the image data.

For descriptions of S820, refer to content of obtaining the detection result shown in S220. Details are not described herein again. For example, content executed by the first compute device 310 shown in FIG. 2 to FIG. 7 may also be executed by the second compute device 320.

In this application, the second compute device 320 (the decoder side) detects the metadata of the received image data, to avoid a metadata error caused in a data transmission process or a video decoding process, and ensure picture quality when an image is displayed.

In a possible embodiment, the second compute device 320 generates an alarm based on the detection result.

The second compute device 320 performs an alarm based on the detection result if the detection result indicates that the similarity between the metadata of the two adjacent frames of images in the plurality of frames of images is less than or equal to a first threshold, and/or geometric characteristic detection of a luminance mapping curve of at least one frame of image in the image data is abnormal.

In a possible implementation, the second compute device 320 may perform an alarm by displaying alarm information on a front end of the second compute device 320, or sending alarm information to a user by using an SMS message or an email. The alarm information indicates that the similarity between the metadata of the two adjacent frames of images in the plurality of frames of images is less than or equal to the first threshold, and/or geometric characteristic detection of the luminance mapping curve of the at least one frame of image in the image data is abnormal.

The front end herein may be a display connected to the second compute device 320, a display screen of the second compute device 320, or the like. This is not limited in this application.

In a possible example, the second compute device 200 further stores the alarm information.

In another possible implementation, the second compute device 320 sends an alarm to a processing unit based on the detection result. The processing unit is configured to map a decoded image onto a processor at the front end. The processing unit is disposed inside the second compute device 320.

The alarm indicates the decoder side to perform mapping processing on one or a plurality of frames of images based on preset metadata. The one or the plurality of frames of images include an image whose metadata is abnormal.

The second compute device 320 may execute content of the following three examples based on an indication of the alarm.

Example 1: The second compute device 320 deletes, based on the indication of the alarm, metadata of a latter frame of image whose metadata has a similarity less than or equal to the first threshold. In addition, when mapping the latter frame of image onto the front end of the second compute device 320, the second compute device 320 performs mapping processing based on the preset metadata.

Example 2: The second compute device 320 deletes, based on the indication of the alarm, metadata of at least one frame of image whose geometric characteristic detection is abnormal in the image data, and performs mapping processing based on the preset metadata when mapping the at least one frame of image whose geometric characteristic detection is abnormal onto the front end of the second compute device 320.

Example 3: The second compute device 320 performs processing based on the preset metadata when mapping the video onto the front end based on the indication of the alarm. In other words, the second compute device 320 deletes metadata obtained by decoding the bitstream, and maps, based on the preset metadata onto the front end for display, an image obtained by decoding the bitstream.

The foregoing describes in detail the metadata detection method provided in this application with reference to FIG. 1 to FIG. 7. The following describes a first metadata detection apparatus provided in this application with reference to FIG. 9. FIG. 9 is a diagram 1 of a structure of a metadata detection apparatus according to this application. The first metadata detection apparatus 900 may be configured to implement a function of the first compute device 310 in the foregoing method embodiments, and therefore can also implement beneficial effects of the foregoing method embodiments.

As shown in FIG. 9, the first metadata detection apparatus 900 includes a first obtaining module 910 and a first processing module 920. The first metadata detection apparatus 900 is configured to implement functions of the first compute device 310 in the method embodiments corresponding to FIG. 1 to FIG. 7. In a possible example, a specific process in which the first metadata detection apparatus 900 is configured to implement the foregoing metadata detection method includes the following process:

The first obtaining module 910 is configured to obtain metadata of image data. The image data includes one or a plurality of frames of images.

The first processing module 920 is configured to process the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

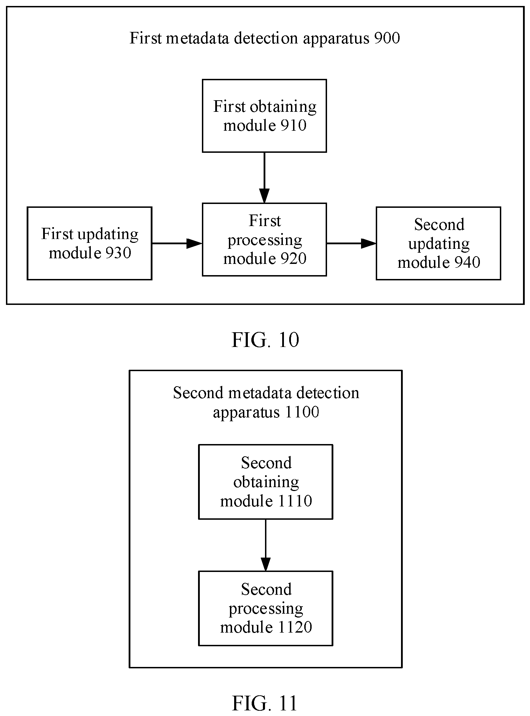

To further implement functions in the method embodiments shown in FIG. 1 to FIG. 7, this application further provides a metadata detection apparatus. FIG. 10 is a diagram 2 of a structure of a metadata detection apparatus according to this application. The first metadata detection apparatus 900 further includes a first updating module 930 and a second updating module 940.

The first updating module 930 is configured to: if one or a plurality of frames of images whose metadata is abnormal as indicated by the detection result are scene switch frames, update, to that the metadata is normal, the one or the plurality of frames of images whose metadata is abnormal as indicated by the detection result, where the scene switch frame is a last frame of image in a plurality of adjacent frames of images whose metadata has a similarity less than or equal to a fourth threshold.

The second updating module 940 is configured to: if the detection result indicates that metadata of one or a plurality of frames of images is abnormal, update the metadata of the one or the plurality of frames of images whose metadata is abnormal.

For descriptions of determining a scene switch frame in the video, refer to the content shown in FIG. 7. Details are not described herein again.

The module is used as an example of a hardware functional unit, and the first obtaining module 910 may include at least one compute device like a server. Alternatively, the first obtaining module 910 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

It should be noted that, in another embodiment, the first obtaining module 910 may be configured to perform any step in the metadata detection method, the first processing module 920 may be configured to perform any step in the metadata detection method, and steps that the first obtaining module 910 and the first processing module 920 are responsible for implementing may be specified according to a requirement. The first obtaining module 910 and the first processing module 920 implement different steps in the metadata detection method to implement all functions of the first metadata detection apparatus.

It should be noted that the first compute device 310 in the foregoing embodiments may correspond to the first metadata detection apparatus 900, and may correspond to corresponding bodies corresponding to FIG. 2 to FIG. 7 in the methods according to the embodiments of this application. Operations and/or functions of modules in the first metadata detection apparatus 900 are respectively used to implement corresponding procedures of the methods in the corresponding embodiments in FIG. 2 to FIG. 7. For brevity, details are not described herein again.

The foregoing describes in detail the metadata detection method provided in this application with reference to FIG. 1 and FIG. 8. The following describes a second metadata detection apparatus provided in this application with reference to FIG. 11. FIG. 11 is a diagram 3 of a structure of a metadata detection apparatus according to this application. The second metadata detection apparatus 1100 may be configured to implement a function of the second compute device 320 in the foregoing method embodiments, and therefore can also implement beneficial effects of the foregoing method embodiments.

As shown in FIG. 11, the second metadata detection apparatus 1100 includes a second obtaining module 1110 and a second processing module 1120. The second metadata detection apparatus 1100 is configured to implement functions of the second compute device 320 in the method embodiments corresponding to FIG. 1 and FIG. 8. In a possible example, a specific process in which the second metadata detection apparatus 1100 is configured to implement the foregoing metadata detection method includes the following process:

The second obtaining module 1110 is configured to obtain metadata of image data.

The second processing module 1120 is configured to process the metadata of the image data based on a detection policy, to obtain a detection result. The detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

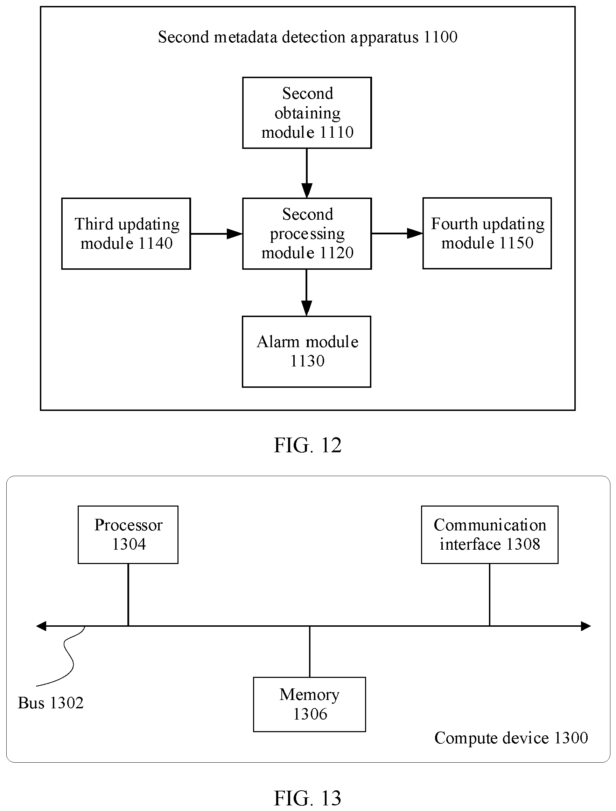

To further implement functions in the method embodiments shown in FIG. 1 and FIG. 8, this application further provides a metadata detection apparatus. FIG. 12 is a diagram 4 of a structure of a metadata detection apparatus according to this application. The second metadata detection apparatus 1100 further includes an alarm module 1130, a third updating module 1140, and a fourth updating module 1150.

The alarm module 1130 is configured to perform an alarm based on the detection result if the detection result indicates that the similarity between the metadata of the two adjacent frames of images in the plurality of frames of images is less than or equal to the first threshold, and/or geometric characteristic detection of a luminance mapping curve of at least one frame of image in the image data is abnormal.

The third updating module 1140 is configured to: if one or a plurality of frames of images whose metadata is abnormal as indicated by the detection result are scene switch frames, update, to that the metadata is normal, the one or the plurality of frames of images whose metadata is abnormal as indicated by the detection result, where the scene switch frame is a last frame of image in a plurality of adjacent frames of images whose metadata has a similarity less than or equal to a fourth threshold.

The fourth updating module 1150 is configured to perform mapping processing on one or a plurality of frames of images based on preset metadata if the detection result indicates that metadata of the one or the plurality of frames of images is abnormal, where the one or the plurality of frames of images include an image whose metadata is abnormal.

It should be noted that the second compute device 320 in the foregoing embodiments may correspond to the second metadata detection apparatus 1100, and may correspond to corresponding bodies corresponding to FIG. 8 in the methods according to the embodiments of this application. Operations and/or functions of modules in the second metadata detection apparatus 1100 are respectively used to implement corresponding procedures of the methods in the corresponding embodiments in FIG. 8. For brevity, details are not described herein again.

In addition, the metadata detection apparatuses shown in FIG. 9 to FIG. 12 may also be implemented by using a communication device. The communication device herein may be the compute device (the first compute device 310 or the second compute device 320) in the foregoing embodiments. Alternatively, when the communication device is a chip or a chip system applied to the compute device, the metadata detection apparatus may also be implemented by using a chip or a chip system.

An embodiment of this application further provides a chip system. The chip system includes a control circuit and an interface circuit. The interface circuit is configured to obtain metadata of image data. The control circuit is configured to implement a function of the compute device in the foregoing method based on the metadata of the image data.

In a possible design, the chip system further includes a memory, configured to store program instructions and/or data. The chip system may include a chip, or may include a chip and another discrete component.

This application further provides a compute device. FIG. 13 is a diagram of a structure of a compute device according to this application. The compute device 1300 includes a bus 1302, a processor 1304, a memory 1306, and a communication interface 1308. The processor 1304, the memory 1306, and the communication interface 1308 communicate with each other through the bus 1302. The compute device 1300 may be a server, a terminal device, or a coder, and the compute device 1300 may be the foregoing first compute device 310 or second compute device 320. It should be noted that a quantity of processors and memories in the compute device 1300 is not limited in this application. The coder may include a decoder or an encoder. When the compute device 1300 is an encoder, the compute device 1300 may be the first compute device 310. When the compute device 1300 is a decoder, the compute device 1300 may be the second compute device 320.

The bus 1302 may be, but is not limited to, a PCIe bus, a universal serial bus (universal serial bus, USB), an inter-integrated circuit (inter-integrated circuit, I2C) bus, an EISA bus, a UB, a CXL, a CCIX, or the like. The bus 1302 may be classified into an address bus, a data bus, a control bus, and the like. To facilitate representation, the bus is represented by using only one line in FIG. 13, but it does not indicate that there is only one bus or one type of buses. The bus 1302 may include a path for transmitting information between components (for example, the memory 1306, the processor 1304, and the communication interface 1308) of the compute device 1300.

The processor 1304 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The memory 1306 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1306 stores executable program code, and the processor 1304 executes the executable program code to separately implement functions of the first obtaining module and the first processing module, to implement the foregoing metadata detection method. In other words, the memory 1306 stores instructions used to perform the metadata detection method.

Alternatively, the memory 1306 stores executable code, and the processor 1304 executes the executable code to separately implement functions of the second obtaining module and the second processing module, to implement the metadata detection method. In other words, the memory 1306 stores instructions used to perform the metadata detection method.

The communication interface 1308 implements communication between the compute device 1300 and another device or a communication network by using a transceiver module, for example, but not limited to a network interface card or a transceiver.

An embodiment of this application further provides a compute device cluster. The compute device cluster includes at least one compute device 1300. The memory 1306 in the one or more compute devices 1300 in the compute device cluster may store same instructions used to perform the metadata detection method.

The compute device 1300 may be a server, for example, a central server, an edge server, or a local server in a local data center. In some embodiments, the compute device 1300 may alternatively be a terminal device, for example, a desktop computer, a notebook computer, or a smartphone.

In some possible implementations, the one or more compute devices in the compute device cluster may be connected over a network. The network may be a wide area network, a local area network, or the like.

An embodiment of this application further provides a computer program product including instructions. The computer program product may be software or a program product that includes the instructions and that can run on a compute device or be stored in any usable medium. When the computer program product runs on at least one compute device, the at least one compute device is enabled to perform the metadata detection method.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct a compute device to perform the metadata detection method.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A metadata detection method, wherein the method is applied to a compute device, and the method comprises:

   obtaining metadata of image data, wherein the image data comprises one or a plurality of frames of images; and
   processing the metadata of the image data based on a detection policy, to obtain a detection result, wherein
   the detection policy indicates to determine a similarity between metadata of two adjacent frames of images in the plurality of frames of images, and/or detect a geometric characteristic of a luminance mapping curve of the image data, a luminance mapping curve of a first image is obtained based on metadata of the first image, and the first image is any frame of image in the image data.

2. The method according to claim 1, wherein obtaining the metadata of the image data comprises:

   receiving a trigger operation performed by a user on a control component in a user interface; and
   obtaining the metadata of the image data in response to the trigger operation performed by the user on the control component.

3. The method according to claim 1 or 2, wherein processing the metadata of the image data based on the detection policy, to obtain the detection result comprises:

   determining luminance mapping curves of the two adjacent frames of images based on the metadata of the two adjacent frames of images, wherein
   if a similarity between the luminance mapping curves of the two adjacent frames of images is less than a first threshold, the detection result indicates that metadata of one of the two adjacent frames of images is abnormal; or
   if a similarity between the luminance mapping curves of the two adjacent frames of images is greater than a first threshold, the detection result indicates that metadata of one of the two adjacent frames of images is normal; or
   if a similarity between the luminance mapping curves of the two adjacent frames of images is equal to a first threshold, the detection result indicates that metadata of one of the two adjacent frames of images is normal or abnormal.

4. The method according to any one of claims 1 to 3, wherein a luminance mapping curve corresponding to a second image comprises a plurality of segments of curves, the second image is any frame of image in the image data, and processing the metadata of the image data based on the detection policy, to obtain the detection result comprises:

   determining a plurality of display luminance values that correspond to the plurality of segments of curves corresponding to the second image at each of the plurality of original luminance values; and
   calculating a difference between the plurality of display luminance values, wherein
   if all differences are less than or equal to a second threshold, the detection result indicates that metadata of the second image is normal; or
   if at least one difference is greater than the second threshold, the detection result indicates that metadata of the second image is abnormal.

5. The method according to any one of claims 1 to 4, wherein a luminance mapping curve corresponding to a third image comprises a plurality of segments of curves, the third image is any frame of image in the image data, and processing the metadata of the image data based on the detection policy, to obtain the detection result comprises:

   determining monotonicity of the plurality of segments of curves corresponding to the third image, wherein
   if the monotonicity corresponding to the plurality of segments of curves is non-uniform, the detection result indicates that metadata of the third image is abnormal; or
   if the monotonicity corresponding to the plurality of segments of curves is uniform, the detection result indicates that metadata of the third image is normal.

6. The method according to any one of claims 1 to 5, wherein processing the metadata of the image data based on the detection policy, to obtain the detection result comprises:

   determining a target original luminance value corresponding to a target display luminance value in a luminance mapping curve corresponding to a fourth image, wherein the fourth image is any frame of image in the image data; and
   calculating a proportion of a quantity of pixels with an original luminance value greater than or less than the target original luminance value in the fourth image to a total quantity of pixels in the fourth image, wherein

if the proportion is greater than a third threshold, the detection result indicates that metadata of the fourth image is abnormal; or

if the proportion is less than the third threshold, the detection result indicates that metadata of the fourth image is normal; or

if the proportion is equal to the third threshold, the detection result indicates that metadata of the fourth image is normal or abnormal.

7. The method according to any one of claims 1 to 6, wherein the plurality of frames of images are images between two scene switch frames, and the scene switch frame is a last frame of image in a plurality of adjacent frames of images whose metadata has a similarity less than or equal to a fourth threshold.

8. The method according to any one of claims 1 to 6, wherein the method further comprises:
if one or a plurality of frames of images whose metadata is abnormal as indicated by the detection result are scene switch frames, updating, to that the metadata is normal, the one or the plurality of frames of images whose metadata is abnormal as indicated by the detection result, wherein the scene switch frame is a last frame of image in a plurality of adjacent frames of images whose metadata has a similarity less than or equal to a fourth threshold.

9. The method according to claim 7 or 8, wherein the scene switch frame may be determined in the following manner:
obtaining a scene switch identifier comprised in metadata of a fifth image, wherein the scene switch identifier indicates that the fifth image is a scene switch frame, and the fifth image is any frame of image in the image data.

10. The method according to claim 7 or 8, wherein the scene switch frame may be determined in the following manner:

determining a similarity between an attribute of a pixel in a sixth image and an attribute of a pixel in a seventh image, wherein the sixth image and the seventh image are located in a same sliding window, the seventh image is one or a plurality of frames of images adjacent to the sixth image, the sixth image and the seventh image are any frames of images in the image data, and the attribute comprises one or more of a luminance value or luminance-chrominance YUV;
calculating a similarity between metadata of the sixth image and metadata of the seventh image if the similarity between the attribute of the pixel in the sixth image and the attribute of the pixel in the seventh image is less than or equal to a fifth threshold; and
determining that the sixth image is the scene switch frame, wherein the similarity between the metadata of the sixth image and the metadata of the seventh image is less than or equal to a sixth threshold.

11. The method according to any one of claims 1 to 10, wherein the method further comprises:
if the detection result indicates that metadata of one or a plurality of frames of images is abnormal, updating the metadata of the one or the plurality of frames of images whose metadata is abnormal.

12. The method according to any one of claims 1 to 10, wherein the method further comprises:
performing an alarm based on the detection result if the detection result indicates that the similarity between the metadata of the two adjacent frames of images in the plurality of frames of images is less than or equal to the first threshold, and/or geometric characteristic detection of a luminance mapping curve of at least one frame of image in the image data is abnormal.

13. The method according to claim 12, wherein the method further comprises:
performing mapping processing on one or a plurality of frames of images based on preset metadata if the detection result indicates that metadata of the one or the plurality of frames of images is abnormal, wherein the one or the plurality of frames of images comprise an image whose metadata is abnormal.

14. A metadata detection apparatus, wherein the apparatus is applied to a compute device, and the apparatus comprises:

a first obtaining module, configured to obtain metadata of image data, wherein the image data comprises one or a plurality of frames of images; and
a first processing module, configured to process the metadata of the image data based on a detection policy, to obtain a detection result, wherein
the detection policy indicates to determine a similarity between metadata of two adjacent frames of images in the image data, and/or detect a geometric characteristic of a luminance mapping curve of the image data, a luminance mapping curve of a first image is obtained based on metadata of the first image, and the first image is any one of the plurality of frames of images.

**15.** A chip, comprising a processor and a power supply circuit, wherein

> the power supply circuit is configured to supply power to the processor; and
> the processor is configured to perform the method according to any one of claims 1 to 13.

**16.** A coder, comprising a memory and a processor, wherein the memory is configured to store computer instructions, and when the processor executes the computer instructions, the method according to any one of claims 1 to 13 is implemented.

**17.** A computer-readable storage medium, wherein the storage medium stores a computer program or instructions, and when the computer program or the instructions are executed by a processing device, the method according to any one of claims 1 to 13 is implemented.

**18.** A computer program product, comprising a computer program or instructions, wherein when the computer program or the instructions are executed by a processing device, the method according to any one of claims 1 to 13 is implemented.

FIG. 1

EP 4 779 560 A1

S210: Obtain →

**Metadata**

Maximum luminance value
Minimum luminance value
...

Metadata corresponding to image data

S220: Process →

**Detection result**

Metadata of a 1st frame of image is normal

Metadata of a 2nd frame of image is abnormal

...

**Detection policy**

FIG. 2

First compute device 310

User interface

Off    On

Metadata detection

S310: Receive a trigger operation

S320: Respond to the trigger operation

First compute device 310

**Metadata**

Maximum luminance value
Minimum luminance value
...

Detect

**Detection result**

Metadata of a 1st frame of image is normal

Metadata of a 2nd frame of image is abnormal

...

FIG. 3

**Detection result**

─ ─ ─ ─ ─ ─ ─ ─
| Metadata of a second |
| image is normal |
─ ─ ─ ─ ─ ─ ─ ─

**Detection result**

─ ─ ─ ─ ─ ─ ─ ─
| Metadata of a second |
| image is abnormal |
─ ─ ─ ─ ─ ─ ─ ─

S430: All differences are less than or equal to a threshold 2

S440: At least one difference is greater than a threshold 2

Display luminance value

Difference 1

Difference 2

S420: Calculate

S410: Determine a plurality of display luminance values corresponding to each original luminance value

d``
d`

c``
c`

Curve 3

Curve 2

Curve 1

a

b

Original luminance value

Mapping curve

FIG. 4

S510: Determine
monotonicity of a
plurality of segments of
curves

S520: The monotonicity
is non-uniform

S530: The monotonicity
is uniform

**Detection result**

Metadata of a
third image
is abnormal

**Detection result**

Metadata of a
third image
is normal

Display
luminance value

Curve 3

Curve 2

Curve 1

a

b

Original
luminance value

Mapping curve

FIG. 5

Display
luminance value

Target display
luminance value

Mapping curve

Fourth image

12%

Target original
luminance value

Original
luminance value

S610: Determine a target original
luminance value corresponding to a
target display luminance value

S620: Calculate a
proportion

S630: The proportion is
greater than a threshold 3

S640: The proportion is
less than a threshold 3

Sample whose original luminance
value is less than or equal to the
target original luminance value

Sample whose original luminance
value is greater than the target
original luminance value

**Detection result**

Metadata of the
fourth image
is abnormal

**Detection result**

Metadata of the
fourth image
is normal

FIG. 6

Sliding window

Seventh image   Sixth image

S710: Determine a similarity between an attribute of a sample in the sixth image and an attribute of a sample in the seventh image

The similarity is less than or equal to a threshold 5

S720: Calculate a similarity between metadata of the sixth image and metadata of the seventh image

The similarity is less than or equal to a threshold 6

S730: Determine that the sixth image is a scene switch frame

FIG. 7

S810: Obtain

**Metadata**

Maximum luminance value
Minimum luminance value
...

Metadata corresponding to image data

S820: Process

**Detection result**

Metadata of a 1st frame of image is normal

Metadata of a 2nd frame of image is abnormal

...

**Detection policy**

Second compute device 320

**FIG. 8**

First metadata detection apparatus 900

First obtaining module 910

First processing module 920

**FIG. 9**

First metadata detection apparatus 900

First obtaining
module 910

First updating
module 930 → First processing
module 920 → Second updating
module 940

FIG. 10

Second metadata detection
apparatus 1100

Second
obtaining
module 1110

Second
processing
module 1120

FIG. 11

Second metadata detection apparatus 1100

Second obtaining module 1110

Third updating module 1140

Second processing module 1120

Fourth updating module 1150

Alarm module 1130

FIG. 12

Processor 1304

Communication interface 1308

Bus 1302

Memory 1306

Compute device 1300

FIG. 13

## INTERNATIONAL SEARCH REPORT

| International application No. |
| --- |
| **PCT/CN2024/099934** |

**A.    CLASSIFICATION OF SUBJECT MATTER**

G06T 7/00(2017.01)i

According to International Patent Classification (IPC) or to both national classification and IPC

**B.    FIELDS SEARCHED**

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU, 必应, BING: 元数据, 图像, 亮度, 像素, 异常, 检测, 高动态范围, 色调映射, 亮度映射曲线, 显示, matadata, image, bright, pixel?, anomaly, detection, HDR, tone mapping, display

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 115880213 A (HUAWEI TECHNOLOGIES CO., LTD.) 31 March 2023 (2023-03-31) description, paragraphs 42-45 and 290-331 | 1-18 |
| Y | CN 114648447 A (HUAWEI TECHNOLOGIES CO., LTD.) 21 June 2022 (2022-06-21) description, paragraph 119 | 1-18 |
| Y | CN 115439794 A (XI'AN UNISOC TECHNOLOGY CO., LTD.) 06 December 2022 (2022-12-06) description, paragraphs 58-64 | 7-10 |
| A | CN 115134574 A (MIGU VIDEO TECHNOLOGY CO., LTD. et al.) 30 September 2022 (2022-09-30) entire document | 1-18 |
| A | US 2023027981 A1 (EMC IP HOLDING COMPANY LLC.) 26 January 2023 (2023-01-26) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 September 2024** | **20 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099934**

| Patent document cited in search report | | | Publication date (day/month/year) | Patent family member(s) | | | Publication date (day/month/year) |
|---|---|---|---|---|---|---|---|
| CN | 115880213 | A | 31 March 2023 | None | | | |
| CN | 114648447 | A | 21 June 2022 | WO | 2022127336 | A1 | 23 June 2022 |
| | | | | BR | 112023011877 | A2 | 11 July 2023 |
| | | | | EP | 4239565 | A1 | 06 September 2023 |
| | | | | US | 2023325987 | A1 | 12 October 2023 |
| | | | | IN | 202327035510 | A | 24 November 2023 |
| CN | 115439794 | A | 06 December 2022 | None | | | |
| CN | 115134574 | A | 30 September 2022 | None | | | |
| US | 2023027981 | A1 | 26 January 2023 | CN | 115695853 | A | 03 February 2023 |

Form PCT/ISA/210 (patent family annex) (July 2022)

**REFERENCES CITED IN THE DESCRIPTION**

**Patent documents cited in the description**

- CN 202311452888